# EUROPÄISCHE PATENTSCHRIFT

(11) **EP 2 736 697 B1**
(45) Veröffentlichungstag und Bekanntmachung des Hinweises auf die Patenterteilung: **21.06.2017**
(21) Anmeldenummer: 12735454.6
(22) Anmeldetag: 07.07.2012
(51) Int. Cl.: B29C 47/00

(54) **WABENKÖRPER UND VERFAHREN ZU DEREN HERSTELLUNG**
MULTIHOLLOW PRODUCT AND METHOD OF MANUFACTURE THE PRODUCT
PRODUIT AVEC NOMBREUX ORIFICES ET PROCÉDÉ POUR MANUFACTURER LE PRODUIT

(30) Priorität: 28.07.2011 DE 102011109178
(43) Veröffentlichungstag der Anmeldung: 04.06.2014
(73) Patentinhaber: STAEDTLER Mars GmbH & Co. KG, 90427 Nürnberg (DE)
(72) Erfinder: THIES, Andreas, 91090 Effeltrich (DE)
(86) Internationale Anmeldenummer: PCT/EP2012/002868
(87) Internationale Veröffentlichungsnummer: WO 2013/013770

(56) Entgegenhaltungen:
- FR-A5- 2 163 786
- GB-A- 756 045
- US-A1- 2004 062 915
- US-A1- 2006 010 883
- US-A1- 2008 003 870

## Beschreibung

Die Erfindung betrifft Wabenkörper nach dem Oberbegriff des Anspruch 1 und ein Verfahren zu deren Herstellung. Wabenkörper nach dem Oberbegriff des Anspruchs 1 werden in US2004062915, US2006010883, FR2163786 und GB756045 offenbart. **Wabenkörper** und deren prinzipieller Aufbau sind aus der Katalysatortechnik, beispielsweise für Kraftfahrzeuge bekannt. Wabenkörper zeichnen sich in der Regel durch eine geringe Dichte bei gleichzeitig hoher Festigkeit auf. Diese Wabenkörper sind zumeist aus teuerer Keramik oder teueren Metallen aufgebaut und weisen eine Vielzahl von - in der Regel zueinander achsparallel angeordnet - hohlen Längsstrukturen auf.

Weiter sind aus der DE-OS 2030578 ein Verfahren und eine Vorrichtung zum kontinuierlichen Herstellen von Strangprofilen bekannt.

Hierbei werden plastifizierte Kunststoffe zu Strangprofilen extrudiert oder Gegenstände wie beispielsweise Rohre mit plastifizierten Kunststoffmaterialien umhüllt.

Derartig hergestellte Gegenstände weisen eine hohe Dichte auf und damit ein hohes Gewicht, was sich gerade bei der Handhabung großer und voluminöser Gegenstände bemerkbar macht.

Weiter sind aus dem Stand der Technik sogenannte Holzersatzwerkstoffe bekannt, welche auch als Wood Plastic Composites (WPC) bezeichnet werden, bei denen es sich um thermoplastisch verarbeitbare Materialien mit unterschiedlichen Anteilen an Holz, Kunststoffen und Additiven handelt, die durch thermoplastische Formgebungsverfahren wie z. B. Extrusion, Spritzguss oder Pressen verarbeitet werden.

So ist in der DE 10 2008 034 013 A1 die Verwendung von WPC für holzgefasste Stifte beschrieben, wobei das WPC hier als Umhüllung einer strangförmigen Mine ausgebildet ist. Holzersatzwerkstoffe, beispielsweise in Form von WPC werden in neuerer Zeit häufig eingesetzt, um die natürlichen Holzvorkommen zu schonen. Nachteilig ist es hierbei, dass WPC eine sehr hohe Dichte (> 1,0 g/cm³) aufweist, höher als die Dichte von Hölzern, welche für die Bleistiftfertigung eingesetzt werden und eine Dichte zwischen 0,3 und 0,6 g/cm³ aufweisen. Die Festigkeit hingegen ist geringer als die von Holz. Anisotrope Eigenschaften wie diese bei Holz vorliegen, können bei WPC nicht realisiert werden.

Bekannt sind auch **Deckings**/Bodenbeläge aus natürlichen Hölzern, wie beispielsweise Zeder, Iroko und Cumaru. Bei der Verarbeitung derartiger Deckings werden natürliche Ressourcen/Holzvorkommen ausgebeutet.

Man ist daher teilweise dazu übergegangen, derartige Deckings auch aus dem eingangs beschrieben WPC's zu fertigen.

Aufgrund der hohen Dichte der WPC's weisen die einzelnen Platten oder Dielen ein hohes Gewicht auf und sind damit sehr schwer handhabbar. Das hohe Gewicht und der damit verbundene Materialeinsatz machen so hergestellte Produkte teuer. Weiter ist es als nachteilig anzusehen, dass bei der Verwendung von WPC, die Deckings keine anisotropen Eigenschaften aufweisen, was zu Lasten der Festigkeit geht.

**Aufgabe** der Erfindung ist es daher, Wabenkörper für Gebrauchs-/Handhabungsgüter zu schaffen, die die Nachteile des bekannten Standes der Technik nicht aufweisen, wobei die Wabenkörper neben einem geringen Gewicht und geringem Materialeinsatz insbesondere eine hohe Festigkeit senkrecht zur Wabenstruktur aufweisen sollen.

Weiter ist es Aufgabe der Erfindung, ein in jeder Hinsicht wirtschaftliches Verfahren zur effektiven und kostengünstigen Herstellung derartiger Wabenkörper zu schaffen.

Diese Aufgabe wird mit den Merkmalen gemäß Anspruch 1 und 5 gelöst. Weitere Ausführungsformen sind mit den entsprechenden Unteransprüchen umfasst.

Es hat sich in überraschender Weise gezeigt, dass in einer gezielt geschaffenen Anisotropie in Materialien von sogenannten Wabenkörper aus Kunststoff und/oder Naturstoff-Kunststoff-Verbundwerkstoff, insbesondere bei Verwendung von Holzersatzwerkstoffen, durch hohle Längsstrukturen eine Optimierung/Erhöhung der Festigkeit bei senkrecht zu den Längsstrukturen auftretenden Belastung erzielt werden kann.

Weiter hat sich zudem gezeigt, dass eine signifikante Verbesserung der Festigkeit im Wesentlichen unabhängig von der Querschnittsform der hohlen Längsstrukturen im Wabenkörper erzielt werden kann.

Als Beispiele für mögliche Querschnitte der achsparallen hohlen Längsstrukturen, welche in den Wabenkörpern ausgebildet sind, seien beispielhaft runde, ellipsenförmige, vielkantige und/oder sternförmige Querschnitte genannt.

Sehr gute Ergebnisse in Punkto Festigkeit und Materialeinsparung konnten dann erzielt werden, wenn die hohlen Längsstrukturen als dünnwandige Kanäle ausgebildet sind.

Zur Verdeutlichung der erfindungsgemäßen Lösung soll die **Figur** dienen.

Die **Figur** zeigt ein Decking-Profil 1 aus WPC, welches mittels Extrusion als Endlosstrang hergestellt wurde und nach seiner Verfestigung/Abkühlung auf Länge geschnitten wurde bzw. werden kann. Das Decking weist in Extrusionsrichtung hohle Längsstrukturen 2 auf, wodurch senkrecht zu den hohlen Längsstrukturen eine signifikant gesteigerte Belastungsfähigkeit/Biegefestigkeit gegenüber einem Vollkörper aus WPC erreicht wird. Die Längstrukturen sind durch dünne Wandabschnitte 3 voneinander getrennt. Der bevorzugte Durchmesser der hohlen Längsstrukturen ist in diesem Beispiel < 1 cm.

Allgemein kann festgehalten werden, dass sehr gute Ergebnisse beispielsweise dann gemessen werden, wenn die Wabenstruktur über den gesamten Querschnitt des Wabenkörpers/Umhüllung ausgebildet ist und/oder die Größe der Waben/Längsstrukturen der von handelsüblichen Katalysatoreinsätzen entspricht.

Es ist jedoch auch möglich die Querschnittsflächen der Waben/Längsstrukturen größer als die bei KFZ-Katalysatoren zu gestalten, denn der Effekt ist bei jeder Ausgestaltung messbar, wobei dies unabhängig von der Querschnittform der hohlen Längsstrukturen ist und/oder unabhängig davon, ob der gesamte Querschnitt des Wabenkörpers hohle Längsstrukturen aufweist. Der bevorzugte Durchmesser der hohlen Längsstrukturen sollte jedoch < 1 cm betragen.

Es hat sich zudem gezeigt, dass Längsstrukturen welche im Randbereich der Umhüllungs-/Wabenkörperoberfläche liegen auch aufgeschnitten sein können, wodurch je nach Querschnittform der Strukturen auch hinterschnittige Konturen entstehen können.

Unabhängig von vorstehend genannten Vorteilen der erfindungsgemäßen Lösung sei als weiterer Vorteil genannt, dass erfindungsgemäß ausgestaltete Wabenkörper eine signifikant geringere Dichte als Vollmaterialien aufweisen, wodurch zum einen das Gewicht sinkt und zum anderen Material bei deren Herstellung gespart wird. Eine Materialeinsparung bei der Verwendung eines Wabenkörpers gegenüber einem vergleichbaren Vollkörper beträgt bis zu 80 Gew. %, abhängig von der Anzahl der eingebrachten Strukturen, abhängig von der Größe der Querschnittsfläche der Längsstrukturen sowie den Wandstärken zwischen den Längsstrukturen.

Hierbei gilt es anzumerken, dass über die hohl ausgebildeten Längsstrukturen der Wabenkörper auch funktionelle Komponenten wie z.B. zur Imprägnation und/oder Einfärbung problemlos eingebracht werden können.

Nachfolgend werden beispielhaft zwei Rahmenbeispiele für mögliche Materialzusammensetzungen von erfindungsgemäßen Wabenkörpern angeführt.

### Rahmenbeispiel 1: (Naturstoff-Kunststoff-Verbundwerkstoff)

mindestens 50 Gew.% Naturstoff(e)
0 bis 20 Gew.% anorganische(r) Füllstoff(e)
0 bis 10 Gew.% Haftvermittler
0 bis 10 Gew.% Farbpigment(e)
0 bis 10 Gew.% Wachs(e)
0 bis 5 Gew.% Additiv(e)
Rest Kunststoff(e) als polymeres Bindemittel

### Rahmenbetspiel 2 (nicht Teil der Erfindung): (Kunststoff-Werkstoff)

mindestens 40 Gew.% Kunststoff(e) als polymere Bindemittel
0 bis 30 Gew.% anorganische Füllstoff(e)
0 bis 20 Gew.% Farbpigment(e)
0 bis 15 Gew.% Wachs(e)
0 bis 5 Gew.% Additiv(e)

Bei den in den Beispielen eingesetzten Kunststoffe/Polymere sind aus den Gruppen der Polyolefine (Polyethylene, Polypropylene), Polystyrole, Polyvinylchlorid, Styrolacrylnitril, Acrylnitril-Butadien-Styrol, Polycarbonat und/oder aus der Gruppe der Biopolymere und Mischungen daraus ausgewählt.

Als organische Füllstoffe/Naturstoffe sind Holz, Nutzpflanzen, Bambus, Kernmehle und/oder Cellulose eingesetzt, die in Pulver-, Mehl- und/oder Faserform vorliegen, wobei die Größe der Füllstoffe eine maximale Partikelgröße 250 µm, insbesondere maximal 100 µm beträgt.

Zum Einstellen der Sprödigkeit ist es vorteilhaft, wenn mindestens ein anorganisches Füllmittel aus der Gruppe der Schichtsilikate, Talkum, Bornitrid, Speckstein und Graphit eingesetzt ist.

Als Farbpigmente können bunte als auch weiße Pigmente eingesetzt werden. So kann beispielsweise Titandioxid zur Aufhellung des Wabenkörpers eingesetzt werden.

In Rezepturen, in denen ein Naturstoff-Kunststoff-Verbundwerkstoff eingesetzt wird, hat es sich als vorteilhaft erwiesen, wenn ein Haftvermittler zur Anbindung des Nativstoffes an den Kunststoff eingesetzt ist. Beispielhaft seien als Haftvermittler ein Polyethylen mit aufgepfropftem Maleinsäureanhydrid oder ein Propylen mit aufgepfropftem Maleinsäureanhydrid genannt.

Die eingesetzten Wachse umfassen Amidwachse, Fettsäuren wie z.B. Stearinsäure und Palmitinsäure, Montanwachse, Stearate, Fettsäureester und/oder Paraffinwachse.
Den Rezepturen können zudem Additive wie beispielsweise Gleitmittel, Weichmacher, oberflächenaktive Substanzen, thermische Stabilisatoren und/oder UV-Stabilisatoren und Fungizide beigefügt sein.

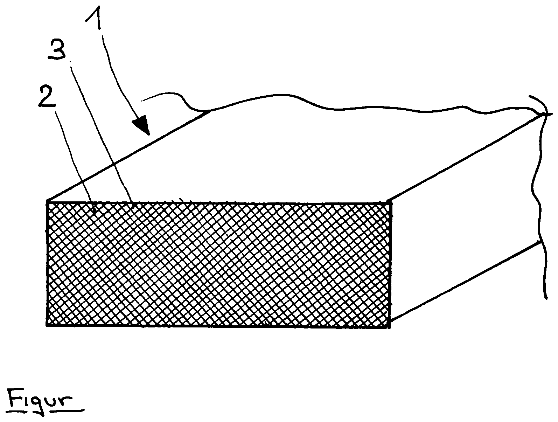

Das in der Figur gezeigte und beschriebene Decking/Wabenkörper wurde mittels einer einfachen Extrusion hergestellt.

Es besteht jedoch auch die Möglichkeit Wabenkörper, Körper, Profile oder dergleichen mittels Co-Extrusion herzustellen, wenn beispielsweise ein Wabenkörper aus mehreren Grundkörpern zusammengesetzt ist. Hierbei können beispielweise die Grundkörper unterschiedliche Materialzusammensetzungen und/oder unterschiedlich ausgebildete Waben/hohle Längsstrukturen aufweisen.

Des Weiteren können Profilkörper, wie beispielsweise Rohre mit dem erfindungsgemäßen Wabenkörper mittels Extrusion über Querspritzköpfe ummantelt werden. Hierbei konnten nicht nur die Festigkeit steigernde Effekte erzielt werden, sondern auch thermische Isolationseffekte.

Die Extrusion oder Co-Extrusion erfolgt mittels dem Fachmann bekannten speziellen Wabenstrukturwerkzeugen, wie sie aus der Ziegel- oder Katalysatorherstellung, zur Ausformung von Hohlkammerprofilen mit Längsstrukturen bekannt ist.
Die Extrusions-Verfahren bieten den Vorteil, dass nahezu alle
Querschnittsgeometrien hergestellt werden können. Daher sind der Verwendung von den erfindungsgemäßen Wabenkörpern kaum Grenzen gesetzt.

Als Verwendungsbeispiele seien beispielhaft Deckings, Möbel bzw. Möbelelemente, Griffe und Zargen für Fenster und Türen genannt.

Es hat sich als vorteilhaft herausgestellt, dass die Verwendung von Wabenkörpern in mobilen Gegenständen eine erhebliche Gewichts- und Materialeinsparung einhergehen. Als Beispiel sei nochmals auf Möbel oder Elemente von/für Möbel hingewiesen, die durch die Verwendung von Wabenkörpern eine geringeres Gewicht aufweisen und damit wesentlich leichter zu handhaben sind.
Dies ist auf viele Gebiete unserer heutigen sehr mobilen Gesellschaft von großem Vorteil.

## Patentansprüche

1. **Wabenkörper,** bestehend mindestens aus einem Grundkörper, wobei der mindestens eine Grundkörper eine Vielzahl von zueinander achsparallel angeordneten hohlen Längsstrukturen beinhaltet,
wobei der Wabenkörper aus extrudiertem Naturstoff-Kunststoff-Verbundwerkstoff gebildet ist,
und wobei der Naturstoff des Naturstoff-Kunststoff-Verbundwerkstoffs aus Holz und/oder Cellulose besteht,
**dadurch gekennzeichnet,**
**dass** der Naturstoff-Kunststoff-Verbundwerkstoff mindestens 50 Gew.% organische Füllstoffe/Naturstoff(e), 0 bis 20 Gew.% anorganische(r) Füllstoff(e), 0 bis 10 Gew.% Haftvermittler, 0 bis 10 Gew.% Farbpigment(e), 0 bis 10 Gew.% Wachs(e), 0 bis 5 Gew.% Additiv(e), und den Rest Kunststoff(e) als polymeres Bindemittel beinhaltet, dass die Größe der organischen Füllstoffe/Naturstoffe eine maximale Partikelgröße von 250 mikrometer aufweist, und dass der Durchmesser der hohlen Längsstrukturen <1 cm beträgt.

2. Wabenkörper nach Anspruch 1
**dadurch gekennzeichnet,**
**dass** das Holz und/oder Cellulose in Pulver-, Mehl- und/oder Faserform vorliegt.

3. Wabenkörper nach Anspruch 1
**dadurch gekennzeichnet,**
**dass** der Kunststoff ein Polymer aus der Gruppe der Polyolefine, Polystyrole, Styrolacrylnitrile, Acrylnitril-Butadien-Styrole, Polycarbonate, Polyvinylchlorid, und/oder aus der Gruppe der Biopolymere und Mischungen daraus ausgewählt ist.

4. Wabenkörper nach mindestens einem der vorstehenden Ansprüche
**dadurch gekennzeichnet,**
**dass** die Querschnitte der Längsstrukturen im Wabenkörper rund, ellipsenförmig, vielkantig und/oder sternförmig ausgebildet sind.

5. **Verfahren zur Herstellung eines Wabenkörpers** nach den Ansprüchen 1 bis 4,
**dadurch gekennzeichnet,**
**dass** der Körper durch Extrusion hergestellt wird.

6. **Verfahren zur Herstellung eines Wabenkörpers** nach Anspruch 5,
**dadurch gekennzeichnet,**
**dass** der Körper, bestehend aus mindestens zwei Grundkörpern, durch Co-Extrusion hergestellt wird.

## Claims

1. Honeycomb body consisting at least of a base body, wherein the at least one base body includes a plurality of hollow longitudinal structures arranged axially parallel to one another,
wherein the honeycomb body is formed from extruded natural material / synthetic material / composite material,
and wherein the natural material of the natural material / synthetic material / composite material consists of wood and/or cellulose,
**characterised in that**
the natural material / synthetic material / composite material contains at least 50 weight % of organic fillers / natural material(s), 0 to 20 weight % of inorganic filler(s), 0 to 10 weight % of adhesion promotor, 0 to 10 weight % of colouring pigment(s), 0 to 10 weight % of wax(es), 0 to 5 weight % of additive(s) and the remainder synthetic material(s) as polymer binder, the size of the organic fillers / natural materials has a maximum particle size of 250 microns and the diameter of the hollowing longitudinal structures is < 1 cm.

2. Honeycomb body according to claim 1, **characterised in that** the wood and/or cellulose is present in pulverulent, powder and/or fibrous form.

3. Honeycomb body according to claim 1, **characterised in that** the synthetic material is a polymer selected from the group of polyolefines, polystyrols, styrolacrylnitriles, acrylnitrile-butadiene-styrols, polycarbonates, polyvinylchloride and/or the group of biopolymers and mixtures thereof.

4. Honeycomb body according to at least one of the preceding claims, **characterised in that** the cross-sections of the longitudinal structures in the honeycomb body are formed to be round, elliptical, polygonal and/or star-shaped.

5. Method of manufacturing a honeycomb body according to claims 1 to 4, **characterised in that** the body is produced by extrusion.

6. Method of producing a honeycomb body according to claim 5, **characterised in that** the body, which consists of at least two base bodies, is produced by co-extrusion.

## Revendications

1. Corps alvéolaire constitué d'au moins un corps de base, ledit corps de base à présence minimale renfermant une multiplicité de structures longitudinales creuses dont les axes sont parallèles les uns aux autres,
ledit corps alvéolaire étant formé d'un matériau composite extrudé matière naturelle-matière plastique,
et la matière naturelle dudit composite matière naturelle-matière plastique consistant en du bois et/ou en de la cellulose,
**caractérisé par le fait**
**que** le composite matière naturelle-matière plastique renferme au moins 50 % en poids de substances de charge/matière(s) naturelle(s) organiques, de 0 à 20 % en poids de substance(s) de charge minérale(s), de 0 à 10 % en poids d'agent d'adhérence, de 0 à 10 % en poids de pigment(s) coloré(s), de 0 à 10 % en poids de cire(s), de 0 à 5 % en poids d'additif(s), la part restante étant constituée de matière(s) plastique(s) en tant que liant polymère ; que la taille desdites substances de charge/matières naturelles organiques présente une grosseur maximale de particules de 250 micromètres ; et que le diamètre des structures longitudinales creuses < 1 cm.

2. Corps alvéolaire selon la revendication 1,
**caractérisé par le fait**
**que** le bois et/ou la cellulose se présente(nt) sous la forme d'une poudre, d'une farine et/ou de fibres.

3. Corps alvéolaire selon la revendication 1,
**caractérisé par le fait**
**que** la matière plastique est un polymère choisi au sein du groupe des polyoléfines, des polystyrènes, des styrène-acrylonitriles, des acrylonitrile-butadiène-styrènes, des polycarbonates, du chlorure de polyvinyle et/ou du groupe des biopolymères, et de mélanges de ces derniers.

4. Corps alvéolaire selon au moins l'une des revendications précédentes,
**caractérisé par le fait**
**que** les sections transversales des structures longitudinales creuses sont circulaires, elliptiques, rectangulaires et/ou en forme d'étoiles dans ledit corps alvéolaire.

5. Procédé de fabrication d'un corps alvéolaire conforme aux revendications 1 à 4,
**caractérisé par le fait**
**que** le corps est produit par extrusion.

6. Procédé de fabrication d'un corps alvéolaire conforme à la revendication 5,
**caractérisé par le fait**
**que** le corps, composé d'au moins deux corps de base, est produit par coextrusion.
